# EUROPEAN PATENT APPLICATION

(11) **EP 4 512 924 A1**
(43) Date of publication of application: **26.02.2025**
(21) Application number: 23815541.0
(22) Date of filing: 27.03.2023
(51) Int. Cl.: C23C 2/12, C21D 1/18, C21D 9/00, C21D 9/46, C22C 21/00, C22C 38/00, C22C 38/60, C23C 28/00

(54) **HOT-PRESSED MEMBER, STEEL SHEET FOR HOT PRESSING, AND METHOD FOR PRODUCING HOT-PRESSED MEMBER**

(30) Priority: 03.06.2022 JP 2022091188
(71) Applicant: JFE Steel Corporation, Tokyo 100-0011 (JP)
(72) Inventor: SATO, Rinta, Tokyo 100-0011 (JP); MAKIMIZU, Yoichi, Tokyo 100-0011 (JP); NISHIIKE, Ryoto, Tokyo 100-0011 (JP); TANAKA, Minoru, Tokyo 100-0011 (JP)
(74) Representative: Hoffmann Eitle
(86) International application number: PCT/JP2023/012271
(87) International publication number: WO 2023/233779

(57) **Abstract**

Provided is a hot pressed member for which an amount of hydrogen entering during the hot press process is small, that can release hydrogen that has entered in a short period of time, and that has excellent delayed fracture resistance. The hot pressed member includes: steel material; an Al-Fe intermetallic compound layer having a thickness of 10 µm to 35 µm, on at least one side of the steel material; and a diffusion layer at an interface between the Al-Fe intermetallic compound layer and the steel material. The Al-Fe intermetallic compound layer includes an Al-rich phase having an Al concentration of 40 mass% or more and an Fe-rich phase having an Al concentration of less than 40 mass%. Average length of the Fe-rich phase in a cross-section in a direction perpendicular to the thickness direction is 10 µm or less.

## Description

### TECHNICAL FIELD

The present disclosure relates to a hot pressed member, a steel sheet for hot press forming, and a method of producing a hot pressed member.

### BACKGROUND

In recent years, as weight reduction and higher performance of blank sheets have been promoted in the automobile field, the use of high-strength hot-dip galvanized steel sheets or electrogalvanized steel sheets having rust resistance has been increasing. However, in many cases, as steel sheets become stronger, press formability decreases, making obtaining complex component shapes more difficult. In automobile applications, examples of difficult to form components that require rust resistance include suspension parts such as the chassis and structural members for framework such as B-pillars.

Against this background, the production of components for automobiles by hot press forming has been rapidly increasing in recent years, as it is easier to achieve both press formability and high strength when compared to cold pressing. In particular, Al coated steel sheets have attracted attention as steel sheets for hot press forming due to having excellent high temperature oxidation resistance, and various Al coated steel sheets suitable for hot press forming and hot pressed members using the Al coated steel sheets have been proposed.

For example, in Patent Literature (PTL) 1, an Al coated steel sheet for hot press forming is proposed that includes an Al coated layer containing 1 mass% to 15 mass% Si and 0.5 mass% to 10 mass% Mg.

### CITATION LIST

### Patent Literature

PTL 1: JP 2003-034845 A

### SUMMARY

### (Technical Problem)

However, conventional technology, such as proposed in PTL 1, has the problems described below.

As mentioned above, hot press forming is widely used in production of structural members for frameworks of automobiles and the like. Hot pressed members have been mainly made to have 1.5 GPa grade tensile strength after hot press forming, but for further weight reduction of automotive bodies, there is a demand for higher strength, such as 1.8 GPa grade tensile strength or more.

However, as the strength of steel material increases, the problem of hydrogen embrittlement becomes correspondingly more pronounced, and therefore more advanced measures against hydrogen embrittlement are needed to increase the strength of hot pressed members.

Here, diffusible hydrogen, which causes hydrogen embrittlement, may be divided into two main causes of hydrogen entry into steel: hydrogen entry during production of hot pressed members, and hydrogen entry caused by corrosion reactions during actual use of hot pressed members. However, in a typical automobile operating environment, the corrosion rate of hot pressed members using Al coated steel sheets as material is small, and the amount of hydrogen produced by corrosion reactions is relatively small.

On the other hand, examples of hydrogen that enters during the production of hot pressed members include hydrogen introduced during production of steel sheets for hot press forming, hydrogen introduced in a hot press process, and hydrogen introduced in a coating process. It is known that the amount of hydrogen introduced during the hot press process is extremely large in the case of a hot pressed member using an Al coated steel sheet as a material.

Therefore, when an Al coated steel sheet is used as a material, reducing diffusible hydrogen content introduced during the hot press process is particularly important.

On the other hand, even when a large amount of hydrogen is introduced into steel during the hot press process, sufficient residence time after hot press forming may allow the hydrogen to be released and decrease the amount of hydrogen in the steel.

However, release rate of hydrogen through a coated layer is extremely small in a hot pressed member using a conventional Al coated steel sheet as a material. Therefore, in order to decrease diffusible hydrogen content to a level that does not cause practical problems, a significantly longer residence time is required, and this is a factor that lowers productivity.

Therefore, in addition to a small amount of hydrogen entering during the hot press process, a hot pressed member is required to be able to release the hydrogen that has entered in a short period of time.

However, conventional hot pressed members have not performed adequately in terms of either decreasing the amount of hydrogen entry or releasing hydrogen that has entered.

The present disclosure is made in view of the circumstances described above, and it would be helpful to provide a hot pressed member for which an amount of hydrogen entering during the hot press process is small, that can release hydrogen that has entered in a short period of time, and that has excellent delayed fracture resistance.

### (Solution to Problem)

As a solution to the problems described above, primary features of the present disclosure are described below.
1. A hot pressed member comprising:
   steel material;
   an Al-Fe intermetallic compound layer having a thickness of 10 µm to 35 µm, on at least one side of the steel material; and
   a diffusion layer at an interface between the Al-Fe intermetallic compound layer and the steel material, wherein
   the Al-Fe intermetallic compound layer includes an Al-rich phase having an Al concentration of 40 mass% or more and an Fe-rich phase having an Al concentration of less than 40 mass%, and
   average length of the Fe-rich phase in a cross-section in a direction perpendicular to the thickness direction is 10 µm or less.
2. The hot pressed member according to 1, above, wherein diffusible hydrogen content in the steel material is 0.30 mass ppm or less.
3. A steel sheet for hot press forming, the steel sheet comprising:
   a base steel sheet; and
   a coated layer having a thickness of 10 µm to 35 µm, on at least one side of the base steel sheet, wherein
   the coated layer comprises:
      an interfacial alloy layer on the base steel sheet; and
      a metal layer having an Al content of 50 mass% or more, on the interfacial alloy layer, wherein
      the interfacial alloy layer contains a Si-rich phase having a Si concentration of 4 mass% or more, and
      a cross-section area fraction of the Si-rich phase to the interfacial alloy layer as a whole is 5 % or more and 30 % or less.
4. The steel sheet for hot press forming according to 3, above, wherein the metal layer contains:
   Si: 0.5 mass% to 7.0 mass%, and
   Fe: 0 mass% to 30 mass%.
5. The steel sheet for hot press forming according to 4, above, wherein the metal layer further contains:
   Mg: 0.1 mass% to 4.0 mass%.
6. A method of producing a hot pressed member by hot press forming the steel sheet for hot press forming according to any one of 3 to 5, above, to obtain a hot pressed member.

### (Advantageous Effect)

According to the present disclosure, a hot pressed member is obtainable for which an amount of hydrogen entering during the hot press process is small, that can release hydrogen that has entered in a short period of time, and that has excellent delayed fracture resistance.

### DETAILED DESCRIPTION

The following describes embodiments of the present disclosure. The following merely describes preferred embodiments of the present disclosure, and the present disclosure is by no means limited to the embodiments described. Further, the unit of content, "%," represents "mass%" unless otherwise specified.

### (1) Hot pressed member

A hot pressed member according to an embodiment of the present disclosure includes a steel material as a base metal, an Al-Fe intermetallic compound layer on at least one side of the steel material, and a diffusion layer formed at the interface between the Al-Fe intermetallic compound layer and the steel material. Each is described below.

### [Steel material]

As described below, according to the present disclosure, the problems described above are solved by providing the Al-Fe intermetallic compound layer and the diffusion layer that satisfy defined conditions on a surface of the steel material. Accordingly, any steel material may be used as the steel material, without any particular limitation.

The hot pressed member is produced by subjecting a steel sheet for hot press forming to hot press forming, as described below. Accordingly, the steel material may also be referred to as a steel sheet formed by hot press forming. Both cold-rolled steel sheets and hot-rolled steel sheets can be used as the steel sheet.

From the viewpoint of use as an automobile member or the like, a high strength hot pressed member is preferred. In particular, to obtain a hot pressed member having a tensile strength exceeding 980 MPa grade, preferably 1.8 GPa grade or more, use of steel material having the following chemical composition is preferred.
C: 0.05 % to 0.50 %,
Si: 0.1 % to 1.5 %,
Mn: 0.5 % to 5.0 %,
P: 0.1 % or less,
S: 0.01 % or less,
Al: 0.10 % or less, and
N: 0.01 % or less,
with the balance being Fe and inevitable impurity.

The following is a description of the effects of each element in the above preferred chemical composition and the preferred content of each element.

### C: 0.05 % to 0.50 %

C is an element that has an effect of increasing strength by causing formation of microstructure such as martensite. From the viewpoint of obtaining strength exceeding 980 MPa grade, C content is preferably 0.05 % or more. The C content is more preferably 0.10 % or more. However, when the C content exceeds 0.50 %, toughness of spot welded portions deteriorates. Accordingly, the C content is preferably 0.50 % or less. The C content is more preferably 0.45 % or less. The C content is even more preferably 0.43 % or less. The C content is most preferably 0.40 % or less.

### Si: 0.1 % to 1.5 %

Si is an effective element in strengthening steel to obtain good material properties. To achieve this effect, Si content is preferably 0.1 % or more. The Si content is more preferably 0.2 % or more. However, when the Si content exceeds 1.5 %, ferrite is stabilized and hardenability is reduced. Accordingly, the Si content is preferably 1.5 % or less. The Si content is more preferably 1.3 % or less. The Si content is even more preferably 1.1 % or less.

### Mn: 0.5 % to 5.0 %

Mn is an effective element for obtaining high strength regardless of cooling rate. From the viewpoint of securing excellent mechanical properties and strength, Mn content is preferably 0.5 % or more. The Mn content is more preferably 0.7 % or more. The Mn content is even more preferably 1.0 % or more. On the other hand, when the Mn content exceeds 5.0 %, costs increase and the effect of Mn addition becomes saturated. Accordingly, the Mn content is preferably 5.0 % or less. The Mn content is more preferably 4.5 % or less. The Mn content is even more preferably 4.0 % or less.

### P: 0.1 % or less

Excessive P content degrades local ductility due to grain boundary embrittlement caused by P segregation to austenite grain boundaries during casting. As a result, balance between strength and ductility of the steel sheet is reduced. Therefore, from the viewpoint of improving the balance between strength and ductility of the steel sheet, the P content is preferably 0.1 % or less. However, from a refining cost perspective, the P content is preferably 0.01 % or more.

### S: 0.01 % or less

S forms as inclusions such as MnS, which cause degradation of impact resistance and cracking along metal flow in welded portions. Therefore, decreasing S content as much as possible is desirable, and specifically 0.01 % or less is preferred. From the viewpoint of good stretch flangeability, the S content is more preferably 0.005 % or less. The S content is even more preferably 0.001 % or less. However, from a refining cost perspective, the S content is preferably 0.0002 % or more.

### Al: 0.10 % or less

Al is an element that acts as a deoxidizer. However, when Al content exceeds 0.1 %, blanking workability and hardenability of the blank sheet decrease. Accordingly, the Al content is preferably 0.10 % or less. The Al content is more preferably 0.07 % or less. The Al content is even more preferably 0.04 % or less. From the viewpoint of securing the effect as a deoxidizing material, the Al content is preferably 0.01 % or more.

### N: 0.01 % or less

When N content exceeds 0.01 %, AlN nitrides are formed during hot rolling or heating before hot press forming, reducing blanking workability and hardenability of the blank sheet. The N content is therefore preferably 0.01 % or less. However, from a refining cost perspective, the N content is preferably 0.001 % or more.

Further, the chemical composition may optionally include at least one selected from the group consisting of:
Nb: 0.10 % or less,
Ti: 0.05 % or less,
B: 0.0002 % to 0.005 %,
Cr: 0.1 % to 1.0 %, and
Sb: 0.003 % to 0.03 %

### Nb: 0.10 % or less

Nb is an effective component for strengthening steel, but excessive content increases rolling load. Therefore, when Nb is added, Nb content is preferably 0.10 % or less. The Nb content is more preferably 0.05 % or less. A lower limit of the Nb content is not particularly limited and may be 0 %. From a refining cost perspective, the Nb content is preferably 0.005 % or more.

### Ti: 0.05 % or less

Ti, like Nb, is an effective component for strengthening steel. However, excessive addition of Ti reduces shape fixability. Therefore, when Ti is added, Ti content is preferably 0.05 % or less. The Ti content is more preferably 0.03 % or less. A lower limit of the Ti content is not particularly limited and may be 0 %. From a refining cost perspective, the Ti content is preferably 0.005 % or more.

### B: 0.0002 % to 0.005 %

B has an effect of inhibiting the formation and growth of ferrite from austenite grain boundaries. When B is added, to obtain the effect, B content is preferably 0.0002 % or more. The B content is more preferably 0.0010 % or more. However, excessive addition of B decreases formability. Therefore, when B is added, the B content is preferably 0.005 % or less. The B content is more preferably 0.003 % or less.

### Cr: 0.1 % to 1.0 %

Cr, like Mn, is a useful element for strengthening steel and improving hardenability. When Cr is added, to obtain the effects, Cr content is preferably 0.1 % or more. The Cr content is more preferably 0.2 % or more. However, Cr is an expensive element, and therefore excessive addition of Cr can significantly increase costs. Therefore, when Cr is added, the Cr content is preferably 1.0 % or less. The Cr content is more preferably 0.6 % or less.

### Sb: 0.003 % to 0.03 %

Sb is an element that acts to inhibit decarburization of a steel sheet surface layer during an annealing process in production of the base steel sheet. When Sb is added, to obtain the effect, Sb content is preferably 0.003 % or more. The Sb content is more preferably 0.005 % or more. However, when the Sb content exceeds 0.03 %, rolling load increases, resulting in lower productivity. Therefore, when Sb is added, the Sb content is preferably 0.03 % or less. The Sb content is more preferably 0.02 % or less. The Sb content is even more preferably 0.01 % or less.

### [Al-Fe intermetallic compound layer]

The hot pressed member according to the present disclosure includes the Al-Fe intermetallic compound layer on at least one side of the steel material. A layer consisting of an Al-Fe intermetallic compound on a surface of the hot pressed member helps prevent the generation and entry of hydrogen associated with steel material corrosion. For example, even when a coating is provided on a surface of a hot pressed member, corrosion typically progresses from areas where the anti-rust function of the coating has deteriorated, such as scratches in the coating or edges of the coating. However, the presence of the Al-Fe intermetallic compound can inhibit corrosion even in such cases and thereby help prevent hydrogen generation and entry.

The Al-Fe intermetallic compound layer may be provided on at least one side of the steel material, but is preferably provided on both sides.

The type of intermetallic compound that constitutes the Al-Fe intermetallic compound layer is not particularly limited. Examples of components of the Al-rich phase are FeAl₃, Fe₄AI₁₃, Fe₂Al₅, and the like. Examples of components of the Fe-rich phase are FeAl, Fe₃Al, and the like. Further, the Al-Fe intermetallic compound can also contain an Al-Fe-Si intermetallic compound such as Fe₂Al₅Si. That is, the Al-Fe intermetallic compound layer according to an embodiment of the present disclosure is a layer containing at least one selected from the group consisting of FeAl₃, Fe₄Al₁₃, Fe₂Al₅, FeAl, Fe₃Al, and Fe₂Al₅Si. Further, the Al-Fe intermetallic compound layer may be a layer consisting of at least one selected from the group consisting of FeAl₃, Fe₄Al₁₃, Fe₂Al₅, FeAl, Fe₃Al, and Fe₂Al₅Si. Identification of these intermetallic compound types can be done by X-ray diffraction.

### Average length: 10 µm or less

In the hot pressed member according to the present disclosure, the Al-Fe intermetallic compound layer includes an Al-rich phase having an Al concentration of 40 % or more and an Fe-rich phase having an Al concentration of less than 40 %. Further, according to the present disclosure, it is important that the average length of the Fe-rich phase in a cross-section in a direction perpendicular to the thickness direction is 10 µm or less. The reason for this is described below.

Generally, when Al coated steel sheets are hot press formed, an Al-Fe intermetallic compound layer is formed, and the Al-Fe intermetallic compound layer has a layered structure. Typically, the Al-Fe intermetallic compound layer has a structure of three or more layers of alternating Al-rich and Fe-rich phases, more commonly five or more layers.

The inventors have found that when the Al-Fe intermetallic compound layer has the layer structure described above, hydrogen is trapped at the interfaces between the layers, which inhibits hydrogen release. That is, in conventional hot pressed members, the rate at which hydrogen that entered steel during a hot press process is released is extremely slow due to the structure of the Al-Fe intermetallic compound layer.

In contrast, in the hot pressed member according to the present disclosure, the average length of the Fe-rich phase in a cross-section in a direction perpendicular to the thickness direction (hereinafter also referred to simply as "average length") is 10 µm or less. This indicates that the Fe-rich phase is finely separated along the sheet surface direction. The hot pressed member according to the present disclosure has excellent hydrogen release properties because of this structure of separated Fe-rich phase. In this way, the present disclosure is based on a completely new technical concept of promoting hydrogen release by separation of the Fe-rich phase.

From the viewpoint of hydrogen release properties, the average length is preferably 8 µm or less. The average length is more preferably 6 µm or less. On the other hand, a lower limit of the average length is not particularly limited. From the viewpoint of scratch resistance, the average length is preferably 2 µm or more. The average length is more preferably 3 µm or more.

Further, the cross-section area fraction of the Fe-rich phase in the Al-Fe intermetallic compound layer is not particularly limited. From the viewpoint of further improving the hydrogen release rate, the cross-section area fraction is preferably 30 % or less. The cross-section area fraction is more preferably 20 % or less. The cross-section area fraction is even more preferably 10 % or less. On the other hand, a lower limit of the cross-section area fraction of the Fe-rich phase is also not particularly limited, but Al is softer than Fe, and therefore scratch resistance is decreased when there is no Fe-rich phase and only a single Al-rich phase. Therefore, from the viewpoint of scratch resistance, the cross-section area fraction of the Fe-rich phase is preferably 3 % or more. The cross-section area fraction is more preferably 5 % or more.

Further, from the viewpoint of further improving the hydrogen release rate, the Fe-rich phase is preferably distributed as islands in the Al-rich phase.

The structure of the Al-Fe intermetallic compound layer, dimensions of each phase, and cross-section area fraction can be measured by observing the cross-section of the Al-Fe intermetallic compound layer using a scanning electron microscope (SEM) equipped with an energy dispersive X-ray (EDX) analyzer and performing image interpretation with respect to the images obtained. More specifically, measurements may be made by a method described in the EXAMPLES section of the present disclosure.

### Thickness: 10 µm to 35 µm

The thickness of the Al-Fe intermetallic compound layer depends on the coated layer thickness of the steel sheet used for hot press forming and hot press forming conditions. When the thickness of the Al-Fe intermetallic compound layer is less than 10 µm, the desired post-coating corrosion resistance cannot be obtained. The thickness of the Al-Fe intermetallic compound layer is therefore 10 µm or more. The thickness is preferably 13 µm or more. The thickness is more preferably 15 µm or more. On the other hand, when the thickness of the Al-Fe intermetallic compound layer exceeds 35 µm, the time required for dehydrogenation becomes longer, even when the morphology of the Fe-rich phase meets the requirements of the present disclosure. The thickness of the Al-Fe intermetallic compound layer is therefore 35 µm or less. The thickness is preferably 30 µm or less. The thickness is more preferably 25 µm or less.

The thickness of the Al-Fe intermetallic compound layer can be measured by the method described in the EXAMPLES section. When the Al-Fe intermetallic compound layer is provided on both sides of the steel material, the thickness of the Al-Fe intermetallic compound layer on each side is 10 µm to 35 µm. However, the thickness of the Al-Fe intermetallic compound layer on one side may be the same as or different from the thickness of the Al-Fe intermetallic compound layer on the other side.

### [Diffusion layer]

The hot pressed member according to the present disclosure includes the diffusion layer formed at the interface between the Al-Fe intermetallic compound layer and the steel material. The diffusion layer has a higher hydrogen diffusion coefficient than the intermetallic compound layer and therefore does not inhibit hydrogen release. Thickness of the diffusion layer is therefore not limited according to the present disclosure. In order to maintain good adhesion between the Al-Fe intermetallic compound layer and the steel material, the thickness of the diffusion layer is preferably 1 µm or more. Further, for the same reason, the thickness of the diffusion layer is preferably 20 µm or less.

The diffusible hydrogen content of the steel material of the hot pressed member according to the present disclosure is not particularly limited. The diffusible hydrogen content is preferably 0.30 mass ppm or less. When the diffusible hydrogen content is 0.30 mass ppm or less, the risk of delayed fracture can be further decreased when residual stress is generated due to assembly or welding of the hot pressed member. To further reduce the risk of delayed fracture, the diffusible hydrogen content in the steel material is more preferably 0.20 mass ppm or less. The diffusible hydrogen content is even more preferably 0.10 mass ppm or less. The lower the diffusible hydrogen content, the better, and therefore a lower limit is not particularly limited and may be 0 mass ppm, but may be 0.01 mass ppm or more considering the quantitative limit of analysis.

According to the present disclosure, the diffusible hydrogen content is defined as the cumulative total of hydrogen when heated to 300 °C according to the thermal desorption analysis method after the Al-Fe intermetallic compound layer is removed by grinding or the like.

Strength of the hot pressed member is not particularly limited, but high strength is desirable because hot pressed members are typically used in applications that require strength, such as components for automobiles. In particular, tensile strength in excess of 1320 MPa is required for framework components such as center pillars that suppress deformation due to a crash. Accordingly, tensile strength of the hot pressed member is preferably more than 1320 MPa. Tensile strength is more preferably more than 1.5 GPa. Tensile strength is even more preferably more than 1.8 GPa. On the other hand, an upper limit of the tensile strength is not particularly limited, but typically may be 2.5 GPa or less, and may be 2.2 GPa or less.

Further, when used as a component such as a side member that is required to absorb energy, excellent yield point and elongation are required. Therefore, the yield point of the hot pressed member is preferably more than 700 MPa. Further, total elongation of the hot pressed member is preferably more than 7 %. On the other hand, an upper limit of the yield point is not particularly limited, but typically may be 1100 MPa or less, and may be 900 MPa or less. An upper limit of the total elongation is not particularly limited, but typically may be 20 % or less, and may be 15 % or less.

### (2) Steel sheet for hot press forming

The steel sheet for hot press forming according to an embodiment of the present disclosure includes the base steel sheet and the coated layer having a thickness of 10 µm to 35 µm on at least one side of the steel sheet. The coated layer includes the interfacial alloy layer on the base steel sheet and the metal layer having an Al content of 50 % or more on the interfacial alloy layer. The interfacial alloy layer contains the Si-rich phase having a Si concentration of 4 % or more, and the cross-section area fraction of the Si-rich phase to the interfacial alloy layer as a whole is 5 % or more and 30 % or less.

### [Coated layer]

When thickness of the coated layer is less than 10 µm, not only is sufficient corrosion resistance not obtained, but the amount of hydrogen entry due to corrosion increases and delayed fracture resistance decreases. The thickness of the coated layer is therefore 10 µm or more. The thickness is preferably 12 µm or more. The thickness is more preferably 15 µm or more. On the other hand, when the thickness of the coated layer exceeds 35 µm, the amount of oxidation of the coated layer becomes large, and therefore the diffusible hydrogen content cannot be sufficiently decreased. The thickness of the coated layer is therefore 35 µm or less. The thickness is preferably 30 µm or less. The thickness is more preferably 25 µm or less. When the coated layer exists on both sides of the base steel sheet, the thickness of coated layer is 10 µm or more and 35 µm or less on each side. The thickness of the coated layer can be directly measured by using an electromagnetic film thickness meter.

The thickness of the coated layer on one side of the base steel sheet and the thickness of the coated layer on the other side may be the same or different. In other words, the thickness of the coated layer on one side of the base steel sheet is 10 µm or more and 35 µm or less, and the thickness of the coated layer on the other side is also 10 µm or more and 35 µm or less.

The coated layer may be directly on the surface of the base steel sheet, or there may be another layer (lower layer) between the base steel sheet and the coated layer. The lower layer may be, for example, a second coated layer (base coat layer) having a composition different from that of the coated layer. As the second coated layer, it is preferable to use, for example, a base coat layer mainly composed of Fe or Ni.

Further, the steel sheet for hot press forming may include another layer (upper layer) on the coated layer. For example, a third coated layer having a composition different from that of the coated layer or a chemical conversion layer can be used as the upper layer. As the third coated layer, it is preferable to use, for example, a coated layer mainly composed of Ni. Further, as the chemical conversion layer, it is preferable to use, for example, a chemical conversion layer containing phosphate, zirconium compounds, titanium compounds, or the like.

### [Interfacial alloy layer]

The steel sheet for hot press forming is typically produced by hot-dip coating the base steel sheet as described below. At this time, components such as Fe and Mn in the base steel sheet react with Al and Si in the coating bath, forming the interfacial alloy layer at the interface between the base steel sheet and the metal layer.

### Cross-section area fraction of Si-rich phase: 5 % or more and 30 % or less

In the steel sheet for hot press forming according to the present disclosure, it is important that the interfacial alloy layer contains a Si-rich phase having a Si concentration of 4 % or more, and that the cross-section area fraction of the Si-rich phase to the interfacial alloy layer as a whole is 5 % or more and 30 % or less. The reason for this is described below.

As mentioned earlier, in the hot pressed member according to the present disclosure, the Fe-rich phase in the Al-Fe intermetallic compound layer is finely separated along the sheet surface direction to achieve excellent hydrogen release properties.

The inventors found that the structure of the Fe-rich phase in the Al-Fe intermetallic compound layer of the hot pressed member depends on the proportion of the Si-rich phase in the interfacial alloy layer of the steel sheet for hot press forming.

Although the detailed mechanism is not clear, it is assumed that this is because the Si-rich phase has a higher melting point relative to low Si concentration phase and does not melt during the hot press forming. By controlling the proportion of the Si-rich phase in the interfacial alloy layer to an appropriate range, the cross-section area fraction and length of the Fe-rich phase in the Al-Fe intermetallic compound layer of the hot pressed member are decreased, and a hot pressed member having a large hydrogen release rate is obtainable.

When the cross-section area fraction of the Si-rich phase relative to the interfacial alloy layer as a whole is more than 30 %, the Fe-rich phase in the Al-Fe intermetallic compound layer of the hot pressed member becomes continuous and the desired hydrogen release property cannot be obtained. The cross-section area fraction of the Si-rich phase is therefore 30 % or less. On the other hand, the Si-rich phase also has the effects of decreasing diffusion of Fe from the base steel sheet to the coated layer in the hot press process and suppressing excessive thickening of the Al-Fe intermetallic compound layer in the hot pressed member. As mentioned earlier, an excessively thick Al-Fe intermetallic compound layer decreases the hydrogen release rate. The cross-section area fraction of the Si-rich phase is therefore 5 % or more. When the cross-section area fraction of the Si-rich phase is 5 % or more, it is easier to set the thickness of the Al-Fe intermetallic compound layer to the desired range, and as a result, the production conditions (heating conditions, and the like) for obtaining a hot pressed member are relaxed and productivity is improved.

Here, the Si-rich phase is defined as a phase having a Si concentration of 4 % or more.

An upper limit of Si concentration in the Si-rich phase is not particularly limited. Si concentration in the Si-rich phase is preferably 30 % or less. Further, there is no particular limitation on components of the Si-rich phase other than Si. According to an embodiment of the present disclosure, the Si-rich layer may contain, in addition to Si, any component derived from the base steel sheet and the coated layer. The Si-rich phase preferably contains Fe, Mn, and Al in addition to Si. A typical composition of the Si-rich phase is exemplified by one that contains Fe: 20 % to 40 %, Si: 4 % to 30 %, and Mn: 0.1 % to 5 %, with the balance consisting of Al and inevitable impurity.

According to the present disclosure, the structure of the Al-Fe intermetallic compound layer in the steel sheet for hot press forming is controlled by controlling the cross-section area fraction of the Si-rich phase in the interfacial alloy layer. Accordingly, distribution and shape of the Si-rich phase in the interfacial alloy layer is not particularly limited. The Si-rich phase may be layered, for example.

Phase separation in the interfacial alloy layer can be determined by image interpretation of images obtained by observation with an SEM equipped with EDX. More specifically, measurements may be made by a method described in the EXAMPLES section of the present disclosure.

### [Metal layer]

The steel sheet for hot press forming according to the present disclosure includes the metal layer on the interfacial alloy layer. The metal layer has an Al content of 50 % or more, and other composition is not particularly limited.

According to an embodiment of the present disclosure, the metal layer can contain Si: 0.5 % to 7.0 % and Fe: 0 % to 30 %. The reason for this is described below.

### Si: 0.5 % to 7.0 %

Si in the metal layer alloy combines with Al and Fe during the hot press forming to form Al-Fe-Si intermetallic compounds, in particular the Fe-rich phase mentioned above. In order to make the Fe-rich phase in the Al-Fe intermetallic compound layer of the hot pressed member discontinuous, it is essential to limit the amount of Si in the metal layer, and therefore Si concentration in the metal layer is preferably 7.0 % or less. The Si concentration in the metal layer is more preferably 5.0 % or less. The Si concentration is even more preferably 3.0 % or less. On the other hand, when the Si concentration is less than 0.5 %, it is difficult for the Fe-rich phase in the Al-Fe intermetallic compound layer of the hot pressed member to form, resulting in lower scratch resistance. Therefore, the Si concentration in the metal layer is preferably 0.5 % or more. The Si concentration is more preferably 1.0 % or more.

### Fe: 0 % to 30 %

When the coated layer is formed by hot-dip coating, Fe is contained in the metal layer by formation of an alloy layer through the reaction between the coating bath and the base metal, or by liquation of the base metal into the coating bath, which is then hot-dip coated. Fe concentration in the metal layer is mainly determined by thickness of the alloy layer formed by the reaction between the coating bath and the base metal, and therefore varies with coating bath temperature, temperature and surface condition of the sheet when entering the coating bath, and time the sheet stays in the coating bath.

When the Fe concentration in the metal layer exceeds 30 %, an excess of Fe-containing intermetallic compounds precipitate in the metal layer. As a result, the alloying rate increases and the intermetallic compound layer in the hot pressed member tends to become thicker. Accordingly, the Fe concentration in the metal layer is preferably 30 % or less. The Fe concentration is more preferably 18 % or less. The Fe concentration is even more preferably 12 % or less. On the other hand, from the viewpoint of decreasing intermetallic compounds in the steel sheet for hot press forming, a lower Fe concentration in the metal layer is preferable. A lower limit of Fe concentration in the metal layer is therefore 0 %.

In the steel sheet for hot press forming according to an embodiment of the present disclosure, the metal layer preferably has a chemical composition containing Si: 0.5 % to 7.0 % and Fe: 0 % to 30 %, with the balance being Al and inevitable impurity.

Examples of inevitable impurity include components derived from the base steel sheet and inevitable impurity in the coating bath. The total content of the inevitable impurity is not particularly limited. However, from the viewpoint of helping prevent degradation of corrosion resistance of the coated layer due to precipitation of intermetallic compounds having a potential difference with the metal layer, the total amount of the inevitable impurity in the coated layer is preferably 1 % or less.

The metal layer preferably further contains Mg: 0.1 % to 4.0 %. The reason for this is described below.

### Mg: 0.1 % to 4.0 %

Diffusible hydrogen in the hot pressed member is caused by oxidation of metal in the coated layer by water vapor contained in the atmosphere during the hot press process. For example, Al and Si in a metallic state exist in the surface layer of a typical Al coated steel sheet for hot press forming, and hydrogen atoms are generated when Al and Si react with water vapor. At this time, the valence of Al is 3, and therefore three hydrogen atoms are generated when Al reacts with water vapor. Similarly, the valence of Si is 4, and therefore four hydrogen atoms are generated when Si reacts with water vapor.

In contrast, the valence of Mg is 2, and therefore generates less hydrogen per atom than Al and Si. In addition, Mg is more readily oxidizable than Al and Si, and therefore water vapor reacts preferentially with Mg when Mg is present. Accordingly, an amount of hydrogen generation can be decreased by including Mg in the coated layer.

When the Mg concentration in the metal layer is 0.1 % or more, the oxidation of Al is sufficiently suppressed and the diffusible hydrogen content is further decreased. Therefore, from the viewpoint of further decreasing the diffusible hydrogen content, the Mg concentration in the metal layer is preferably 0.1 % or more. The Mg concentration is more preferably 0.3 % or more. The Mg concentration is even more preferably 1 % or more. On the other hand, when the Mg concentration is 4.0 % or less, oxide formed by oxidation of Mg becomes film-like rather than granular, and protection against oxidation of Mg itself is improved. As a result, the diffusible hydrogen content is further decreased. Therefore, from the viewpoint of further decreasing the diffusible hydrogen content, the Mg concentration is preferably 4.0 % or less. The Mg concentration is more preferably 3.0 % or less. The Mg concentration is even more preferably 2.0 % or less.

According to another embodiment of the present disclosure, the chemical composition of the metal layer further contains at least one selected from the group consisting of Mn, V, Cr, Mo, Ti, Ni, Co, Sb, Zr, and B, totaling 1 % or less.

### (3) Method of producing hot pressed member

Next, a preferred method of producing the hot pressed member according to the present disclosure is described.

According to an embodiment of the present disclosure, the coated steel sheet for hot press forming is hot pressed to produce the hot pressed member. The steel sheet for hot press forming that satisfies the conditions mentioned above can be hot pressed under typical conditions to obtain the hot pressed member that satisfies the above conditions.

The method of hot press forming is not particularly limited and may be a conventional method. Typically, the steel sheet for hot press forming is heated to a defined heating temperature (heating process), and then the steel sheet for hot press forming heated in the heating process is subjected to hot press forming (hot press process). Preferred hot press forming conditions are described below.

### [Heating]

When heating temperature in the heating process is lower than the Ac3 transformation temperature of the base steel sheet, the strength of the final hot pressed member becomes low. The heating temperature is therefore preferably the Ac3 transformation temperature of the base steel sheet or more. The heating temperature is preferably 860 °C or more. On the other hand, when the heating temperature exceeds 1000 °C, the oxide layer produced by oxidation of the base metal and the coated layer becomes excessively thick, which may degrade coating adhesion property of the resulting hot pressed member. The heating temperature is therefore preferably 1000 °C or less. The heating temperature is more preferably 960 °C or less. The heating temperature is even more preferably 920 °C or less. The Ac3 transformation temperature of the base steel sheet depends on steel composition, but is determined by Formastor^{®} (Formaster is a registered trademark in Japan, other countries, or both) testing.

The temperature at which the heating is started is not particularly limited, but is generally room temperature.

The time required to raise the temperature from the start of heating to reach the heating temperature (heat-up time) is not particularly limited and may be any time. However, when the heat-up time exceeds 300 s, the oxide layer produced by oxidation of the base metal and the coated layer becomes excessively thick because of longer exposure time to high temperature. Therefore, from the viewpoint of suppressing a decrease in coating adhesion property due to oxides, the heat-up time is preferably 300 s or less. The heat-up time is more preferably 270 s or less. The heat-up time is even more preferably 240 s or less. On the other hand, when the heat-up time is less than 150 s, the coated layer may melt excessively during the heating, risking fouling of a heating apparatus and press die. Therefore, from the viewpoint of further enhancing an effect of preventing fouling of the heating apparatus and press die, the heat-up time is preferably 150 s or more. The heat-up time is more preferably 180 s or more. The heat-up time is even more preferably 210 s or more.

After the heating temperature is reached, holding at the heating temperature may be performed. When the holding is performed, hold time is not particularly limited and can be any length of time. However, when the hold time exceeds 300 s, the oxide layer produced by oxidation of the base metal and the coated layer may become excessively thick, which risks degrading the coating adhesion property of the resulting hot pressed member. The hold time is therefore preferably 300 s or less. The hold time is more preferably 210 s or less. The hold time is even more preferably 120 s or less. On the other hand, a lower limit of the hold time is also not limited and may be 0 s. From the viewpoint of uniformly austenitizing the base steel sheet, the hold time is preferably 10 s or more.

The atmosphere in the heating process is not particularly limited, and heating can be performed under an air atmosphere as well as in an atmosphere with air atmosphere flow. From the viewpoint of further decreasing the diffusible hydrogen content remaining in the member after hot press forming, the dew point of the atmosphere is preferably 0 °C or less. A lower limit of the dew point is not particularly limited. The dew point may be -40 °C or more, for example.

The method of heating the steel sheet for hot press forming is not particularly limited and any method can be used. The heating can be performed, for example, by furnace heating, electrical resistance heating, induction heating, high-frequency heating, flame heating, and the like. Any heating furnace, such as an electric furnace or a gas furnace, may be used as the heating furnace.

### [Hot press forming]

After the heating, the steel sheet is subjected to hot press forming to obtain the hot pressed member. In the hot press forming, cooling is performed using a refrigerant such as the press die or water at the same time as or immediately after forming. According to the present disclosure, hot press forming conditions are not particularly limited. For example, hot press forming can be performed at 600 °C to 800 °C, which is a typical temperature range for hot press forming.

### (4) Method of producing steel sheet for hot press forming

Next, a preferred method of producing the steel sheet for hot press forming according to the present disclosure is described.

The steel sheet for hot press forming according to the present disclosure can be produced by hot-dip coating the base steel sheet. However, in order to decrease the cross-section area fraction of the Si-rich phase in the steel sheet for hot press forming to 30 % or less, both (A) and (B) below must be performed in the production process.
(A) Decrease Si content in the coating bath
(B) Decrease Si content in the outermost surface layer of the steel sheet

Examples of specific methods of (B) above include the following (B-1) through (B-3).
(B-1) Increase coiling temperature after hot rolling
(B-2) Increase dew point of recrystallization annealing
(B-3) Form Fe pre-coating layer

The following describes specific conditions for producing the steel sheet for hot press forming using these methods.

### [Base steel sheet]

Any steel sheet may be used as the base steel sheet without particular limitation. The chemical composition of the base steel sheet is not particularly limited. The chemical composition of the base steel sheet is preferably the same as the preferred chemical composition of the steel material described above.

The base steel sheet may be a hot-rolled steel sheet or a cold-rolled steel sheet.

When a hot-rolled steel sheet is used as the base steel sheet, the hot-rolled steel sheet can be produced according to a conventional method. Typically, a steel slab as material is heated and then hot rolled. In the hot rolling, rough rolling and finishing rolling can be applied sequentially. After the hot rolling, pickling is preferably performed.

### (B-1) Increase coiling temperature after hot rolling

The resulting hot-rolled steel sheet is coiled. At this time, by increasing the coiling temperature, internal oxides can form inside the surface layer of the steel sheet. The formation of internal oxides can decrease the rate of Si diffusion into the outermost surface layer of the steel sheet during the hot-dip coating process, resulting in a lower cross-section area fraction of the Si-rich phase in the steel sheet for hot press forming. Therefore, to make the cross-section area fraction of the Si-rich phase 30 % or less, the coiling temperature is 600 °C or more. The coiling temperature is preferably 620 °C or more. The coiling temperature is more preferably 630 °C or more. The coiling temperature is even more preferably 650 °C or more. On the other hand, when the coiling temperature is too high, the internal oxidation layer of the steel sheet becomes too thick and weldability is decreased. Therefore, from the viewpoint of weldability, the coiling temperature is preferably 800 °C or less.

When a cold-rolled steel sheet is used as the base steel sheet, then after the hot-rolled steel sheet is pickled, cold rolling is performed according to a conventional method. Rolling reduction in the cold rolling is not particularly limited. From the viewpoint of mechanical properties of the steel sheet, the rolling reduction is preferably 30 % or more. Further, from the viewpoint of rolling costs, the rolling reduction is preferably 90 % or less.

The steel sheet may be subjected to recrystallization annealing prior to hot-dip coating. The conditions for recrystallization annealing are not particularly limited and can be performed in accordance with a conventional method. For example, after the steel sheet is subjected to a cleaning treatment such as degreasing, an annealing furnace can be used to perform heat treatment by heating the steel sheet to a defined temperature in a heating zone followed by a defined heat treatment in a soaking zone. The atmosphere in the annealing furnace is not particularly limited, but a reducing atmosphere is preferred to activate the surface layer of the steel sheet.

### (B-2) Increase dew point of recrystallization annealing

When the recrystallization annealing is performed, the dew point of the atmosphere during the recrystallization annealing can be increased to form internal oxides inside the surface layer of the steel sheet and decrease the diffusion rate of Si to the outermost surface layer of the steel sheet during the hot-dip coating process. To obtain the above effect, the dew point needs to be 0 °C or more. An upper limit of the dew point is not particularly limited, but stable control of the dew point to be 20 °C or more requires extensive humidification apparatus, which increases apparatus costs. The dew point is therefore preferably 20 °C or less.

### (B-3) Form Fe pre-coating layer

It is preferable to form an Fe pre-coating layer on the base steel sheet prior to hot-dip coating. By forming a Fe pre-coating layer on the surface of the base steel sheet, the Si content in the outermost surface layer of the steel sheet can be decreased, resulting in a decrease in the cross-section area fraction of the Si-rich phase in the steel sheet for hot press forming. The composition of the Fe pre-coating layer is not particularly limited. The Si concentration in the Fe pre-coating layer is preferably less than 0.1 %. The Fe pre-coating layer is more preferably substantially free of Si. The total concentration of components other than Fe in the Fe pre-coating layer is preferably less than 10 %. In other words, the Fe pre-coating layer is preferably a coated or plated layer containing 90 % or more Fe. The Fe pre-coating layer may be, for example, an Fe coated or plated layer, an Fe-P alloy coated or plated layer, an Fe-B alloy coated or plated layer, or an Fe-O alloy coated or plated layer.

The method of applying the Fe pre-coating layer is not particularly limited. The Fe pre-coating layer is preferably formed by electroplating, which has excellent deposition speed and economic efficiency. The coating weight of the Fe pre-coating layer is preferably 100 mg/m² or more from the viewpoint of stabilizing coating or plating quality. On the other hand, an excessively large coating weight saturates the effect of reducing the Si content in the outermost surface layer of the steel sheet and only increases production costs. Accordingly, the coating weight of the Fe pre-coating layer is preferably 10 g/m² or less.

### [Hot-dip coating]

According to the present disclosure, the steel sheet is immersed in a hot-dip coating bath to form the coated layer. As the coating bath, a coating bath having the following chemical composition needs to be used. The reason for this is described below.
Si: 0.5 % to 7.0 %, and
Fe: 0 % to 10.0 %,
with the balance being Al and inevitable impurity.

### Si: 0.5 % to 7.0 %

Si is an element that reacts with Al in the bath and with Fe, Mn, and the like in the base metal to form the interfacial alloy layer in the steel sheet for hot press forming. When the Si content in the coating bath is less than 0.5 %, the interfacial alloy layer grows significantly faster in the coating bath, resulting in a coating with inferior cold workability and making it difficult to stably obtain a coated layer having a thickness of 10 µm to 30 µm. The SI content is therefore 0.5 % or more. On the other hand, when the Si content is higher than 7.0 %, the cross-section area fraction of the Si-rich phase in the steel sheet for hot press forming becomes higher than 30 %. For this reason, the Si content is 7.0 % or less.

To obtain the steel sheet for hot press forming in which the cross-section area fraction of the Si-rich phase is 30 % or less, in addition to making the Si content in the coating bath 7.0 % or less, as described above, at least one of (B-1), (B-2), and (B-3) mentioned above needs to be performed.

### Fe: 0 % to 10.0 %

Fe is a component present in the bath due to dissolution from the steel sheet or bath apparatus. When the Fe content in the coating bath exceeds 10.0 %, the amount of dross in the bath becomes excessive, and appearance quality degrades due to adhesion to the coated steel sheet. The Fe concentration in the coating bath is therefore 10.0 % or less. The Fe concentration is preferably 5.0 % or less. The Fe concentration is more preferably 3.0 % or less. From the viewpoint of appearance quality, the lower the Fe concentration in the coating bath, the better. A lower limit of the Fe content in the coating bath is therefore 0 %. Even when the Fe content in the coating bath is 0 %, the intermetallic compound layer is formed by the reaction between the steel substrate and the coating bath components during hot-dip coating.

The chemical composition of the coating bath can further contain Mg.

### Mg: 0.1 % to 4.0 %

For the purpose of further decreasing the amount of hydrogen that enters during the hot press process, Mg may be added to the metal layer of the steel sheet for hot press forming as described above, and an appropriate amount of Mg may also be added to the coating bath for this purpose. The Mg concentration in the metal layer is approximately the same as Mg concentration in the coating bath, and therefore the range of preferred Mg content in the coating bath and the reasons for this are the same as those described for the Mg concentration in the metal layer.

The inevitable impurity includes components derived from the base steel sheet and inevitable impurity in the metal material (ingots and the like) used to supply hot-dip coating bath components. The total content of the inevitable impurity is not particularly limited, but is preferably 1 % or less in total.

According to another embodiment of the present disclosure, the chemical composition of the hot-dip coating bath further contains at least one selected from the group consisting of Mn, V, Cr, Mo, Ti, Ni, Co, Sb, Zr, and B, totaling 1 % or less.

Temperature of the coating bath is preferably in a range from (solidification start temperature + 20 °C) to 700 °C. When the temperature of the coating bath is (solidification start temperature + 20 °C) or more, local solidification of components caused by local temperature drop of the coating bath can be prevented. When the temperature of the coating bath is 700 °C or less, rapid cooling after coating becomes easier, and excessive thickening of the intermetallic compound layer formed between the steel sheet and the metal layer can be prevented.

Further, the temperature of the base steel sheet entering the coating bath (entering sheet temperature) is not particularly limited. From the viewpoint of securing appropriate coating properties in continuous hot-dip coating operation and preventing change in the bath temperature, the entering sheet temperature is preferably controlled within ± 20 °C in relation to the temperature of the coating bath.

The immersion time of the steel sheet in the hot-dip coating bath is not particularly limited. From the viewpoint of securing a stable coated layer thickness, the immersion time is preferably 1 s or more. On the other hand, an upper limit of the immersion time is also not particularly limited. From the viewpoint of preventing excessive thickening of the intermetallic compound layer formed between the steel sheet and the metal layer, the immersion time is preferably 5 s or less.

The conditions for immersion of the base steel sheet in the coating bath are not particularly limited. For example, when coating treatment is performed with respect to a relatively thin steel sheet having a thickness of 0.6 mm or more and less than 1.6 mm, line speed is preferably 150 mpm to 230 mpm. When coating treatment is performed with respect to a relatively thick steel sheet having a thickness of 1.6 mm or more and 3.0 mm or less, line speed is preferably about 40 mpm. Further, immersion length is preferably 5 m to 7 m.

According to the present disclosure, cooling of the base steel sheet after immersion in the coating bath is not particularly limited and can be performed by any method. The cooling is preferably performed under a nitrogen gas atmosphere. Cooling under a nitrogen gas atmosphere is preferred because an extremely high cooling rate is not required and extensive cooling apparatus is not required, making cooling under a nitrogen gas atmosphere highly economical. The nitrogen gas atmosphere may contain 4 vol% or less of hydrogen gas.

Although not particularly limited, producing steel sheets for hot press forming in a continuous galvanizing line is preferable. As a continuous mode coating apparatus, either a continuous mode coating apparatus with a non-oxidizing furnace or a continuous mode coating apparatus without a non-oxidizing furnace may be used. The steel sheet for hot press forming according to the present disclosure does not require such a specialized apparatus and may be implemented by a typical hot-dip coating apparatus, and is therefore excellent in terms of productivity.

### EXAMPLES

Functions and effects according to the present disclosure are described below with reference to Examples. However, the present disclosure is not limited to the following Examples.

First, base steel sheets were prepared according to the following procedure.

Steel having a chemical composition containing, in mass%, C: 0.34 %, Si: 0.25 %, Mn: 1.20 %, P: 0.005 %, S: 0.001 %, Al: 0.03 %, N: 0.004 %, Ti: 0.02 %, B: 0.002 %, Cr: 0.18 %, and Sb: 0.008 %, with the balance being Fe and inevitable impurity, was smelted in a converter and cooled in air to obtain steel slabs. The Ac₃ transformation temperature of the steel was 783 °C and the Ar₃ transformation temperature of the steel was 706 °C.

Each steel slab was heated to 1200 °C and then hot rolled to a thickness of 3.0 mm to obtain a hot-rolled steel sheet. The finishing temperature in the hot rolling was 930 °C. The resulting hot-rolled steel sheets were coiled at the coiling temperatures listed in Table 1, and then cooled in air.

Each of the hot-rolled steel sheets was pickled and then cold rolled to a thickness of 1.4 mm to obtain a cold-rolled steel sheet.

On surfaces of the cold-rolled steel sheets, an Fe plated layer was formed as a pre-coating layer. The Fe plated layer was formed by electroplating, and the conditions for this were as follows. For comparison, the Fe plated layer was not formed in some cases (Table 1).
- Composition of plating solution
   Ferrous sulfate: 300 g/L
   Sodium sulfate: 50 g/L
- pH: 1.8 to 2.2
- Bath temperature: 55 °C
- Current density: 100 A/dm²
- Coating weight of Fe plated layer: 500 mg/m²

The base steel sheets were immersed in coating baths having the chemical compositions listed in Table 1 to apply hot-dip coating. The bath temperature of each coating bath used was 660 °C. After pulling each steel sheet from the coating bath, the coated layer was solidified by cooling at an average cooling rate of 15 °C/s to obtain a steel sheet for hot press forming. The cooling was performed by N₂ gas wiping.

The thickness of the coated layer, the chemical composition of the metal layer, and the cross-section area fraction of the Si-rich layer were measured for the steel sheets for hot press forming by the following methods. The measurement results are listed in Table 2.

### (Thickness of coated layer)

Each of the steel sheets for hot press forming was embedded in electrically conductive resin, and a cross-section was observed by an SEM to obtain a reflected electron image. The observations were made in five randomly selected fields of view at a magnification of 500×. The obtained reflected electron images were analyzed based on contrast, the area of the coated layer in the field of view was calculated, and divided by the width of the field of view to obtain the average thickness of the coated layer in the field of view. The arithmetic mean of the average thickness of the five fields of view was taken as the thickness of the coated layer on the steel sheet for hot press forming.

### (Cross-section area fraction of Si-rich phase)

The element distribution and concentration of the interfacial alloy layer of each of the steel sheets for hot press forming were quantified by an electron probe microanalyzer (EPMA). The observations were made in five randomly selected fields of view at a magnification of 1000×. First, a contrast threshold for the reflected electron image was set, the interfacial alloy layer between the metal layer and the base metal was extracted, and the cross-section area (S1) of the interfacial alloy layer was determined. The steel sheets for hot press forming for all Examples included the interfacial alloy layer and the metal layer on the interfacial alloy layer.

Next, the region where Si concentration was 4 mass% or more was determined by EPMA quantification as Si-rich phase, and the cross-section area (S2) of the Si-rich phase was determined. The cross-section area fraction of the Si-rich phase relative to the interfacial alloy layer as a whole was obtained by dividing S2 by S1 for each of the above five fields of view, and the average value was taken as the cross-section area fraction of the Si-rich phase in the steel sheet for hot press forming.

### (Chemical composition of metal layer)

The element distribution and concentration of the metal layer of each of the steel sheets for hot press forming were measured by an EPMA in the same way as for the interfacial alloy layer. The measurements were performed in five randomly selected fields of view at a magnification of 1000×. First, the metal layer was extracted by setting the contrast threshold of the reflected electron images, and the average composition of the metal layer was determined by performing surface analysis on the metal layer via the EPMA. Measurements taken over five fields of view were averaged to obtain a representative value.

The steel sheets for hot press forming were then subjected to hot press forming to produce hot pressed members according to the following procedure. First, from each of the steel sheets for hot press forming, a 100 mm × 200 mm test piece was taken and subjected to heat treatment in an electric furnace. Heating temperature was 910 °C, heat-up time was 210 s, and hold time was 180 s in the heat treatment. The heating was performed in an atmosphere having a dew point of 10 °C.

After the defined hold time had elapsed, each test piece was removed from the electric furnace and immediately hot pressed at a forming start temperature of 720 °C using a hat-type press die to obtain a hot pressed member. The shape of each obtained hot pressed member was 100 mm in flat length on the top surface, 30 mm in flat length on the side surfaces, and 20 mm in flat length on the bottom surface. Further, the bending radius (or bending R) of the press die was 7 R for both shoulders on the top and bottom surfaces.

The thickness of the Al-Fe intermetallic compound layer, composition analysis, and morphology of the Fe-rich phase were measured for each hot pressed member by the following methods. The measurement results are listed in Table 3.

### (Thickness of Al-Fe intermetallic compound layer)

The head flat of each hot pressed member was embedded in electrically conductive resin, and a cross-section was observed by an SEM to obtain a reflected electron image. The observations were made in five randomly selected fields of view at a magnification of 500×. The obtained reflected electron images were analyzed based on contrast, the area of the Al-Fe intermetallic compound layer in the field of view was calculated, and divided by the width of the field of view to obtain the average thickness of the Al-Fe intermetallic compound layer in the field of view. The arithmetic mean of the average thickness of the five fields of view was taken as representative of the thickness of the Al-Fe intermetallic compound layer in the hot pressed member.

### (Analysis of morphology of Al-Fe intermetallic compound layer)

The head flat of each of the hot pressed members was embedded in electrically conductive resin, and element distribution and concentration were quantified by an EPMA in a field of view that included the entire thickness of the Al-Fe alloy layer. The observations were made in five randomly selected fields of view at a magnification of 1000×. A region where the Al concentration was less than 40 mass%, as quantified by the EPMA, was considered to be the Fe-rich phase, and the balance, that is, a region where the Al concentration was 40 mass% or more, was considered to be the Al-rich phase. In each field of view, the cross-section area fraction of the Fe-rich phase was calculated by dividing the area of the Fe-rich phase by the area of the Al-Fe intermetallic compound layer, and the average value of the cross-section area fraction in the five fields of view was taken as the cross-section area fraction of the Fe-rich phase in the corresponding steel sheet for hot press forming. Further, length in the cross-section direction in the sheet in-plane direction of each independent Fe-rich phase present in each field of view was measured, and the average length of the Fe-rich phase in the cross-section in the direction perpendicular to the thickness direction was determined by averaging the measurements for all five fields of view.

To evaluate hydrogen embrittlement resistance of each of the hot pressed members due to hydrogen that entered during the hot press process, diffusible hydrogen content in the steel was measured immediately after press forming, and a hydrogen release rate was measured by measuring the change over time of hydrogen content during storage at room temperature.

### (Diffusible hydrogen content in steel)

Diffusible hydrogen content in the hot pressed member immediately after press forming was measured by the following method. For each hot pressed member, a small piece of size 10 mm × 15 mm was cut from a flat section that had a low amount of deformation, and the intermetallic compound layer and diffusion layer on both sides was removed by grinding with a precision die grinder. Then, thermal desorption analysis was performed, and the cumulative total of hydrogen when heating to 300 °C was taken as the diffusible hydrogen content. A thermal desorption analyzer produced by J-Science Group was used for the thermal desorption analysis, with argon as the carrier gas and a heating rate of 200 °C/s. The diffusible hydrogen content in the steel was evaluated using the following criteria. The evaluation results are listed in Table 3.
1: less than 0.30 mass ppm
2: 0.30 mass ppm or more and less than 0.50 mass ppm
3: 0.50 mass ppm or more and less than 1.00 mass ppm
4: 1.00 mass ppm or more

### (Hydrogen release time)

After hot press forming, the hot pressed members were stored in a constant temperature room at 25 °C for 24 h or 1 week, and small pieces were cut out and diffusible hydrogen content in the steel was measured in the same way as described above for the diffusible hydrogen immediately after press forming. An approximation formula using an exponential function of change in diffusible hydrogen content over time was developed using the least squares method from data at three points: immediately after hot press forming, 24 hours after, and one week after. Using the approximation formula, time required for diffusible hydrogen content in the steel to decrease to 0.20 mass ppm was estimated, and this was used as the hydrogen release time. Hydrogen release was not evaluated for hot pressed members that had less than 0.20 mass ppm of diffusible hydrogen content immediately after heat treatment. Based on the hydrogen release time obtained, the hydrogen release property was evaluated using the following criteria. The evaluation results are listed in Table 3.
1: less than 24 h
2: 24 h or more and less than 120 h
3: 120 h or more and less than 240 h
4: 240 h or more
-: no evaluation performed because the diffusible hydrogen content immediately after heat treatment was less than 0.20 mass ppm

Based on the evaluation results of diffusible hydrogen content in steel and hydrogen release time, an overall evaluation was made using the following criteria.
1: diffusible hydrogen content in steel was 1
2: diffusible hydrogen content in steel was 2 or 3 and hydrogen release time was 1 or 2
3: diffusible hydrogen content in steel was 2 or 3 and hydrogen release time was 3
4: at least one of diffusible hydrogen content in steel or hydrogen release time was 4

As can be seen from the results listed in Table 3, the hot pressed members that satisfied the conditions of the present disclosure had an overall evaluation of 2 or 1. In other words, the hot pressed member had a low diffusible hydrogen content of 0.30 mass ppm or less immediately after hot pressing, which meant that the risk of hydrogen embrittlement was small, or even when the hydrogen content immediately after hot press forming was high, exceeding 0.30 mass ppm, the hydrogen content could be reduced to 0.20 mass ppm or less after storage at room temperature for 120 h or less, which meant that the risk of embrittlement due to hydrogen entry could be easily decreased. In contrast, hot pressed members that did not satisfy the conditions of the present disclosure had high hydrogen content immediately after hot press forming, and decreasing the hydrogen content in a short time period was also difficult.

### [Table 1]

**Table 1**

| No. | Production conditions for steel sheet for hot press forming | | | | | |
|---|---|---|---|---|---|---|
| | Coiling temperature after hot rolling (°C) | Pre-coating | Chemical composition of coating bath (mass%) | | | |
| | | | Al | Si | Mg | Fe |
| 1 | 700 | Yes | 98 | 0.0 | 0.0 | 2.0 |
| 2 | 700 | Yes | 98 | 0.3 | 0.0 | 2.0 |
| 3 | 700 | Yes | 97 | 1.0 | 0.0 | 2.0 |
| 4 | 700 | Yes | 94 | 4.0 | 0.0 | 2.0 |
| 5 | 700 | Yes | 94 | 4.0 | 0.0 | 2.0 |
| 6 | 700 | Yes | 94 | 4.0 | 0.0 | 2.0 |
| 7 | 700 | Yes | 94 | 4.0 | 0.0 | 2.0 |
| 8 | 700 | Yes | 88 | 4.0 | 0.0 | 8.0 |
| 9 | 700 | Yes | 94 | 4.0 | 0.2 | 2.0 |
| 10 | 700 | Yes | 93 | 4.0 | 1.0 | 2.0 |
| 11 | 700 | Yes | 93 | 4.0 | 1.0 | 2.0 |
| 12 | 700 | Yes | 93 | 4.0 | 1.0 | 2.0 |
| 13 | 700 | Yes | 92 | 4.0 | 2.0 | 2.0 |
| 14 | 700 | Yes | 91 | 4.0 | 3.5 | 2.0 |
| 15 | 700 | Yes | 87 | 4.0 | 1.0 | 8.0 |
| 16 | 700 | Yes | 92 | 6.0 | 0.0 | 2.0 |
| 17 | 700 | Yes | 91 | 6.0 | 1.0 | 2.0 |
| 18 | 700 | Yes | 86 | 6.5 | 3.5 | 4.0 |
| 19 | 700 | Yes | 84 | 6.5 | 3.5 | 6.0 |
| 20 | 500 | Yes | 92 | 6.0 | 0.0 | 2.0 |
| 21 | 700 | No | 92 | 6.0 | 0.0 | 2.0 |
| 22 | 500 | No | 92 | 6.0 | 0.0 | 2.0 |
| 23 | 700 | Yes | 88 | 10.0 | 0.0 | 2.0 |
| 24 | 700 | Yes | 88 | 10.0 | 0.3 | 2.0 |
| 25 | 700 | Yes | 84 | 8.0 | 6.0 | 2.0 |

### [Table 2]

**Table 2**

| No. | Steel sheet for hot press forming | | | | | | Remarks |
|---|---|---|---|---|---|---|---|
| | Coated layer thickness (µm) | Chemical composition of metal layer (mass%) | | | | Cross-section area fraction of Si-rich phase (%) | |
| | | Al | Si | Mg | Fe | | |
| 1 | 35 | 100 | 0.0 | 0.0 | 0.0 | 1 | Comparative Example |
| 2 | 20 | 100 | 0.0 | 0.0 | 0.0 | 1 | Comparative Example |
| 3 | 20 | 100 | 0.0 | 0.0 | 0.0 | 7 | Example |
| 4 | 12 | 99 | 1.5 | 0.0 | 0.0 | 26 | Example |
| 5 | 20 | 98 | 2.0 | 0.0 | 0.0 | 13 | Example |
| 6 | 28 | 98 | 2.4 | 0.0 | 0.0 | 10 | Example |
| 7 | 40 | 98 | 1.6 | 0.0 | 0.0 | 6 | Comparative Example |
| 8 | 20 | 95 | 1.7 | 0.0 | 3.3 | 14 | Example |
| 9 | 12 | 98 | 2.1 | 0.1 | 0.0 | 15 | Example |
| 10 | 12 | 98 | 1.3 | 0.8 | 0.0 | 10 | Example |
| 11 | 20 | 97 | 2.0 | 0.9 | 0.0 | 16 | Example |
| 12 | 28 | 97 | 2.5 | 0.8 | 0.0 | 9 | Example |
| 13 | 20 | 96 | 2.8 | 1.2 | 0.0 | 17 | Example |
| 14 | 20 | 95 | 1.9 | 3.4 | 0.0 | 13 | Example |
| 15 | 20 | 89 | 2.4 | 0.9 | 7.9 | 11 | Example |
| 16 | 20 | 96 | 4.2 | 0.0 | 0.0 | 25 | Example |
| 17 | 20 | 94 | 4.7 | 1.0 | 0.0 | 29 | Example |
| 18 | 15 | 70 | 5.0 | 3.0 | 22.0 | 12 | Example |
| 19 | 12 | 51 | 6.0 | 3.0 | 40.0 | 9 | Example |
| 20 | 20 | 96 | 3.9 | 0.0 | 0.0 | 27 | Example |
| 21 | 20 | 96 | 4.5 | 0.0 | 0.0 | 29 | Example |
| 22 | 20 | 96 | 4.1 | 0.0 | 0.0 | 44 | Comparative Example |
| 23 | 20 | 95 | 5.2 | 0.0 | 0.0 | 56 | Comparative Example |
| 24 | 20 | 93 | 6.4 | 0.2 | 0.0 | 51 | Comparative Example |
| 25 | 20 | 89 | 5.2 | 5.7 | 0.0 | 45 | Comparative Example |

### [Table 3]

**Table 3**

| No. | Hot pressed member | | | | | | | | Remarks |
|---|---|---|---|---|---|---|---|---|---|
| | Al-Fe intermetallic compound layer | | | Evaluation result | | | | | |
| | Thickness | Fe-rich phase | | Diffusible hydrogen content in steel (mass ppm) | Evaluation | Hydrogen release time (h) | Evaluation | Overall evaluation | |
| | | Cross-section area fraction (%) | Average length (µm) | | | | | | |
| 1 | 55 | 0 | | 0.55 | 3 | 132 | 3 | 3 | Comparative Example |
| 2 | 40 | 1 | 4 | 0.62 | 3 | 180 | 3 | 3 | Comparative Example |
| 3 | 25 | 5 | 7 | 0.48 | 3 | 12 | 1 | 2 | Example |
| 4 | 18 | 5 | 7 | 0.45 | 3 | 16 | 1 | 2 | Example |
| 5 | 25 | 2 | 5 | 0.51 | 3 | 23 | 1 | 2 | Example |
| 6 | 33 | 1 | 4 | 0.53 | 3 | 96 | 2 | 2 | Example |
| 7 | 45 | 1 | 4 | 0.52 | 3 | 140 | 3 | 3 | Comparative Example |
| 8 | 22 | 8 | 6 | 0.53 | 3 | 19 | 1 | 2 | Example |
| 9 | 17 | 4 | 6 | 0.39 | 2 | 6 | 1 | 2 | Example |
| 10 | 16 | 4 | 6 | 0.15 | 1 | | | 1 | Example |
| 11 | 23 | 3 | 5 | 0.12 | 1 | | | 1 | Example |
| 12 | 32 | 1 | 5 | 0.11 | 1 | | | 1 | Example |
| 13 | 30 | 3 | 5 | 0.15 | 1 | | | 1 | Example |
| 14 | 23 | 4 | 6 | 0.42 | 2 | 10 | 1 | 2 | Example |
| 15 | 22 | 2 | 5 | 0.13 | 1 | | | 1 | Example |
| 16 | 24 | 2 | 5 | 0.60 | 3 | 72 | 2 | 2 | Example |
| 17 | 23 | 27 | 9 | 0.18 | 1 | | | 1 | Example |
| 18 | 15 | 22 | 5 | 0.67 | 3 | 72 | 2 | 2 | Example |
| 19 | 12 | 28 | 8 | 0.61 | 3 | 48 | 2 | 2 | Example |
| 20 | 23 | 11 | 8 | 0.55 | 3 | 105 | 2 | 2 | Example |
| 21 | 23 | 14 | 9 | 0.63 | 3 | 96 | 2 | 2 | Example |
| 22 | 22 | 29 | 11 | 0.53 | 3 | 160 | 3 | 3 | Comparative Example |
| 23 | 26 | 26 | 121 | 0.61 | 3 | 720 | 4 | 4 | Comparative Example |
| 24 | 25 | 25 | 108 | 0.33 | 3 | 135 | 3 | 3 | Comparative Example |
| 25 | 18 | 18 | 42 | 1.04 | 4 | 720 | 4 | 4 | Comparative Example |

## Claims

1. A hot pressed member comprising:
steel material;
an Al-Fe intermetallic compound layer having a thickness of 10 µm to 35 µm, on at least one side of the steel material; and
a diffusion layer at an interface between the Al-Fe intermetallic compound layer and the steel material, wherein
the Al-Fe intermetallic compound layer includes an Al-rich phase having an Al concentration of 40 mass% or more and an Fe-rich phase having an Al concentration of less than 40 mass%, and
average length of the Fe-rich phase in a cross-section in a direction perpendicular to the thickness direction is 10 µm or less.

2. The hot pressed member according to claim 1, wherein diffusible hydrogen content in the steel material is 0.30 mass ppm or less.

3. A steel sheet for hot press forming, the steel sheet comprising:
a base steel sheet; and
a coated layer having a thickness of 10 µm to 35 µm, on at least one side of the base steel sheet, wherein
the coated layer comprises:
an interfacial alloy layer on the base steel sheet; and
a metal layer having an Al content of 50 mass% or more, on the interfacial alloy layer, wherein
the interfacial alloy layer contains a Si-rich phase having a Si concentration of 4 mass% or more, and
a cross-section area fraction of the Si-rich phase to the interfacial alloy layer as a whole is 5 % or more and 30 % or less.

4. The steel sheet for hot press forming according to claim 3, wherein
the metal layer contains:
Si: 0.5 mass% to 7.0 mass%, and
Fe: 0 mass% to 30 mass%.

5. The steel sheet for hot press forming according to claim 4, wherein
the metal layer further contains:
Mg: 0.1 mass% to 4.0 mass%.

6. A method of producing a hot pressed member by hot press forming the steel sheet for hot press forming according to any one of claims 3 to 5, to obtain a hot pressed member.
